# EUROPEAN PATENT APPLICATION

(11) **EP 1 221 406 A2**
(43) Date of publication of application: **10.07.2002**
(21) Application number: 01204877.3
(22) Date of filing: 13.12.2001
(51) Int. Cl.: B62H 3/12

(54) **Device for storing bicycles**

(30) Priority: 03.01.2001 NL 1017026
(71) Applicant: Minck, Lodewijk Petrus Maria, NL-2181 VG Hillegom (NL)
(72) Inventor: Minck, Lodewijk Petrus Maria, NL-2181 VG Hillegom (NL)
(74) Representative: Lips, Hendrik Jan George, Ir.

(57) **Abstract**

Device for storing bicycles (4), said device comprising an endless conveyor chain (5) which can be driven and is supported at a distance above the ground by guiding means (7) and from which conveyor, by means of suspension hooks (6), the front wheel (16) of a bicycle can be suspended. At the location where a bicycle can be put into and removed from the device, there is a manipulator (11) comprising a beam (12) along which a carriage (13) is movable, said carriage being provided with a clamp (15) capable of engaging the front wheel of the bicycle for bringing it upwards and transferring it to a suspension hook (6) and vice versa.

The beam (12) of the manipulator (11) is pivotably mounted to a pivot shaft (19) near its upper end, so that it can pivot within a plane being square to the longitudinal direction of the conveyor chain (5). There are means (20, 21) for moving the beam (12) from an inwardly slanted position into an outwardly slanted position.

## Description

The invention relates to a device for storing bicycles, said device comprising an endless conveyor chain which can be driven and is supported at a distance above the ground by guiding means, by which conveyor, by means of suspension hooks, the front wheel of a bicycle can be suspended, a manipulator being situated where a bicycle can be put: into and removed from the device, said manipulator comprising a beam along which a carriage is movable, said carriage being provided with means capable of engaging the front wheel of the bicycle for moving it upwards and transferring it to a suspension hook and vice versa.

Such a device is known from EP-A-1.162.131. This known device has the drawback that the bicycle must be guided by a person when its front wheel is picked-up and brought upward. Namely, e.g. the rear fender must be prevented from contacting the ground or grating along the ground on moving the bicycle's front wheel upwards. The same holds good in case of bringing the bicycle downwards when it should be removed from the storage. In connection with the location of the centre of gravity of the bicycle, thus, in both cases, the luggage rack or the saddle has to be pulled so that the rear wheel will move away from the manipulator and the rear fender will remain free from the ground.

Now, not every person is capable of exerting sufficient force on the bicycle when bringing the bicycle into a storage and removing it from a storage. Further, it will take the person some time to store the bicycle in the way described, and the person will have to be in the vicinity of noving parts, something which is obviously less desirable.

A further drawback of said known device is that the hook coupled to the carriage engages the uppermost part of the front wheel. When the hook engages at a lower position, the wheel will start rotating as soon as it is lifted from the ground. When e.g. a basket is mounted above the front wheel, this will cause problems. It is also possible that the fender at the front wheel will be damaged by the hook.

Finally, a rather complicated structure is required for bringing the front wheel of the bicycle from the manipulator onto the means connected to the conveyor chain.

The object of the invention is to remove these drawbacks and to that end provides for, that the carriage is provided with a clamp for clamping the front wheel of a bicycle and that the beam of the manipulator, along which the carriage moves, is pivotably mounted to a pivot shaft near its upper end, in such a way that the beam can pivot within a plane being square to the longitudinal direction of the conveyor chain, means being present for moving the beam from an inwardly slanted position into an outwardly slanted position, and vice versa, said conveyor chain being provided with hooks, from which the front wheel of a bicycle can be suspended.

When picking up a bicycle, the beam of the robot will be slanted outwards and the front wheel will be clamped to the carriage, to wit approximately at the level of the wheel shaft. Then, on moving the carriage upwards, the wheel will maintain its fixed position in relation to said carriage, and the further part of the bicycle will rotate in relation to the wheel. The beam can take up such an outwardly slanted position, that the rear fender of the bicycle will not contact the ground when its front wheel is moved upwards. After the front wheel has been moved upwards across a sufficient distance, the beam will be pivoted inwards so that the bicycle will suspend from the carriage more or less freely. When the uppermost part of the front wheel, which is at a distance from the clamp, has arrived at the level of a suspension hook connected to the conveyor chain, the bent portion of the suspension hook can be brought under the wheel rim, such as by moving the conveyor chain. After that, the carriage can be moved slightly downwards, so that the wheel rim will come to bear in the suspension hook and the clamp can release the wheel. By moving the carriage downwards the clamp can be moved out of the way of the bicycle being conveyed by the conveyor chain.

In particular, the clamp can be designed in such a way, that a first part of it is fixedly connected to the carriage, whereas the counterpart is movable, at least one of the parts extending across such a length, that it contacts the rim of the wheel or the tyre located on it, at two spaced-apart positions.

As a result of that, a firm clamping of the wheel can be achieved, also with wheels and tyres of different dimensions. The part of the clamp being fixedly connected to the carriage will be at the side from where the suspension hook connected to the conveyor chain is moved towards the bicycle wheel to be taken up. Then, the conveyor chain, when a hook connected to it should take up a bicycle, can always be stopped at the same position.

Although operation of the counterpart of the clamp can occur in various ways, it will preferably occur in a pneumatic way. A bicycle storage will mostly have a compressor device for pumping-up bicycle tyres.

In particular the counterpart of the clamp can be constituted by at least one inflatable air cushion, at one side being directed to the first part of the clamp which is fixedly connected to the carriage and at the other side contacting a support portion fixedly connected to the carriage.

Such an air cushion can of course be easily adapted to the shape of the rim and the bicycle tyre located on it so that the bicycle wheel is always firmly clamped.

Since the clamp of the carriage clamps the wheel in a certain position, it is not necessary to guide the bicycle when moving the front wheel up or down. This means that the person bringing the bicycle into the device or wishing to remove the bicycle from it, can remain at a distance from moving parts.

Basically, it can be provided for, that at some distance from the beam of the manipulator there is a wall having an opening, through which the bicycle can be ridden until its front wheel is received between the parts of the clamp which are connected to the carriage and the steering rod of the bicycle is almost within the opening in the wall.

After the front wheel has been clamped by the clamp, the person can release the steering rod of the bicycle and need not do anything further. Thus, he will remain outside of the space screened by the wall and can not be contacted by moving parts.

In particular, the carriage will be provided with at least one switch, which, in the lowermost or uppermost position of the carriage, can be operated directly or indirectly by the front wheel of a bicycle in order to activate the clamp connected to the carriage.

The switch can be directly operated in that it will contact the front wheel of the bicycle. However, it is also possible to employ a vicinity switch or a photo cell or a similar member detecting the presence of a front wheel and actuating the switch activating the clamp.

When bringing a bicycle into the device, the front wheel can be ridden against the switch, so that first the clamp will be activated and then the carriage will be moved upwards. Naturally, movement of the carriage will take place in the known manner. When removing the bicycle from the storage, one will act in a corresponding manner. The front wheel of the bicycle can then be brought in the vicinity of the carriage by moving the suspension hook, such as with the help of the conveyor chain. After that, the carriage can be moved upward and the beam of the manipulator can be pivoted so that the wheel of the bicycle will contact the switch of the carriage and the wheel will be clamped. After that, the carriage can be moved downward and the further procedure can be performed in order bring the bicycle out of the storage.

In order to achieve, in particular when removing a bicycle from a storage, that the bicycle will be guided through the opening in the wall, a guiding trough fcr the wheels of a bicycle will be provided on the ground near the manipulator.

For pivoting the beam of the manipulator, one can use an electrically or pneumatically driven rod system.

Generally, a higher degree of accuracy of the desired position of the rod can be achieved with an electric drive.

As aforesaid, the bent portion of the suspension hook can be brought underneath the wheel rim or from it, by moving the conveyor chain. Thus, the conveyor chain with all possible bicycles suspending from it should then be brought in motion and be moved across a rather small distance. A bicycle grabbed by a clamp should obviously not be able to contact the bicycle hanging next to it. This will have to be taken into account when determining the distances between bicycles.

In order to keep the distance between the bicycles hanging next to each other as small as possible, it can be provided for, that the suspension hook is pivotably connected to the conveyor chain, in such a way that the pivot: axis is square to the longitudinal direction of the conveyor chain and extends parallel to the plane in which the conveyor chain is situated, the suspension hook being movable between two end positions, said suspension hook and carriage being provided with members capable of cooperating with one another in order to bring the suspension hook from ore end position to the other end position.

The suspension hook can e.g. be held in both end positions because a tension spring has been mounted between the suspension hook and a fixed point of the conveyor chain, said tension spring passing the pivot shaft when moving the suspension hook from one end position to the other, said suspension hook being provided with cams capable of cooperating with a pushing element connected to the carriage.

Thus, the suspension hook will then be completely mechanically operated. However, it is also possible to employ electrically or pneumatically operated means connected to the carriage, which will engage parts of the suspension hook when moving the carriage upward.

Further, EP-A-0 659 958 is referred to, which describes a device for storing bicycles, in which every bicycle is hanged in a separate cage. By means of rollers situated at upper and lower sides of the cages, a number of cages are guided along two elongated rods extending in parallel, connecting to one another by semi-circular parts. A conveyor chain for moving the cages extends along the upper system. In every cage there is a pivotable rod system for bringing the bicycle concerned into the vertical position and holding it in that position.

Here, the cage will have to be at least so wide, that the bicycle having the widest steering rod can be received in it. Wit the present invention, the bicycles can be suspended at alternate heights, as a result of which more bicycles per unit of length can be accommodated. Further, only one manipulator arranged on one location is required, whereas the mass to be moved is considerably lower, since only the bicycles need be moved and not the cages with their individual rod systems as well, as is the case with the known device.

The invention is further explained by way of an embodiment, illustrated in the drawing, in which:
Fig. 1 shows schematically a plan view of a bicycle storage in which a number of devices according to the invention have been arranged;
Fig. 2 shows schematically a plan view, on an enlarged scale, of a part of Fig. 1 with a number of bicycles mounted in it;
Fig. 3 shows schematically an elevational view of a manipulator for use with the device, with a bicycle, which will be taken up or be released by the manipulator;
Fig. 4 shows an elevational view according to Fig. 3, but with the bicycle in the position in which it has been suspended from the conveyor chain;
Figs. 5 and 6 show schematically elevational views of a suspension hook pivotably connected to the conveyor chain in its both end positions and the cooperating members of suspension hook and carriage.

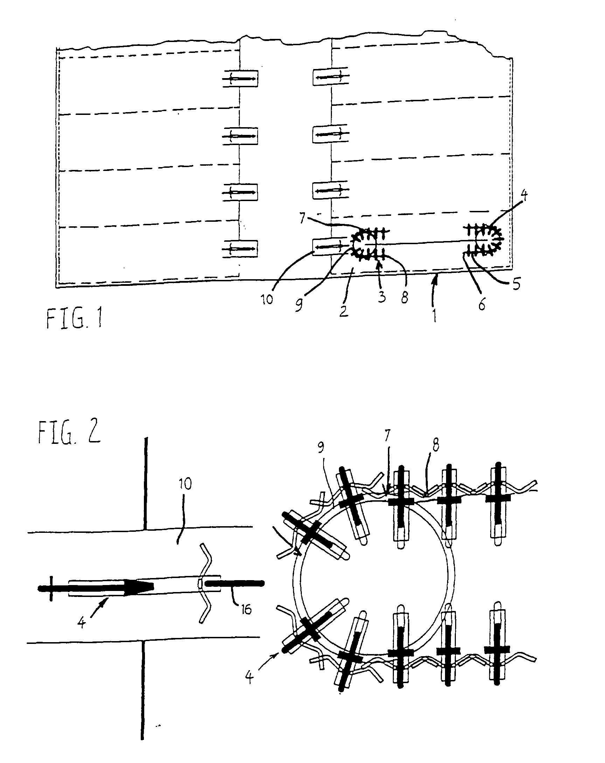

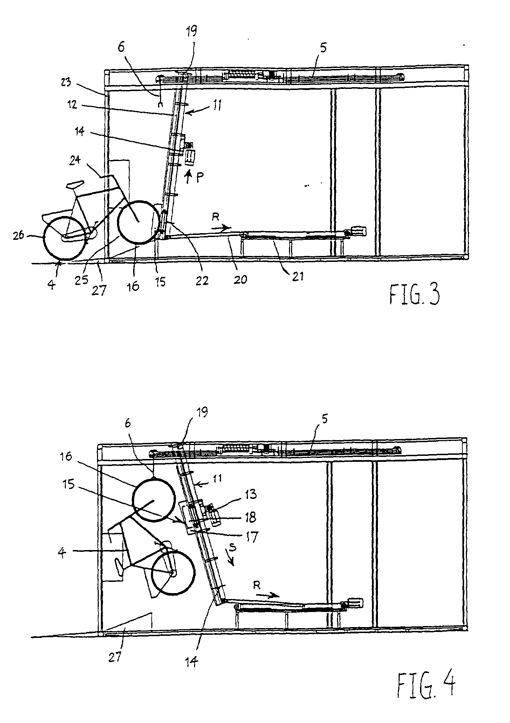

Fig. 1 shows a plan of a bicycle storage 1 comprising a number of compartments 2, each of which incorporating a device 3 suitable for storing a number of bicycles 4, as appears from Fig. 2.

To that end, each device 3 comprises a conveyor chain 5, provided with a number of suspension hooks 6. The conveyor chain 5 is supported by guiding means 7 consisting of two straight paths 8 extending in parallel and two bends 9.

On the location 10, approximately in the centre of a bend 9, a bicycle 4 can be brought into the device 3 or be removed from it, as it has been illustrated in more detail in Fig. 2.

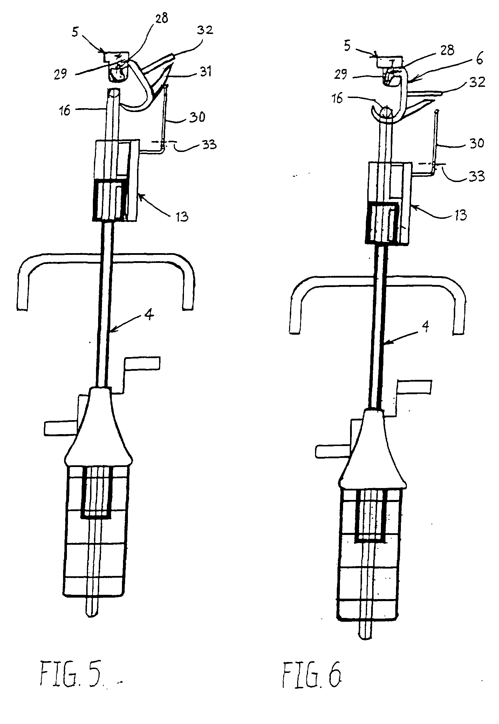

Figures 3 and 4 show in particular an elevational view of the manipulator 11 as it is used for bringing the front wheel 16 of a bicycle 4 into a suspension hook 6 and removing it from said hook.

The manipulator 11 comprises a beam 12 along which a carriage 13 is movable, such as by means of a motor-driven endless chain 14, for example. The carriage 13 is provided with a clamp 15, comprising a first part 17 being fixedly connected to the carriage 13 and a counterpart 18, which can be constituted in particular by at least one inflatable air cushion, not further indicated, having one side facing first part 17 and the other side bearing against a supporting part fixedly connected to the carriage and not further indicated.

The air cushion will have been made of a firm yet sufficiently flexible material, such as rubber or a plastic, such as kevlar, or a similar material. The first part 17 of the clamp 15, which part is fixedly connected to the carriage, will generally consist of metal, and will be coated with a slightly resilient material in order to prevent damage to the wheel rim.

The beam 12 is suspended from a pivot shaft 19 and can be pivoted by means of a rod 20 pivotably connected to it, having its other end pivotably coupled to a rod 21 being movable only in axial direction. For moving the rod 21, means known per se can be employed.

In fig. 3, the carriage 13 is illustrated in its lowermost position when the front wheel 16 of the bicycle 4 has been ridden in the clamp 15 and against the carriage 13. Then, a switch 22 is operated, which provides for that pressurized air is supplied to the counterpart 18 of the clamp 15 so that the wheel 16 will be clamped.

The bicycle has been ridden through an opening in the wall 23 not further indicated, so that the steering rod 24 of the bicycle is approximately in the opening. The person wishing to store the bicycle will thus remain standing at the outside of wall 23 and can, after the front wheel has been clamped, let go of the steering rod.

After the front wheel has been clamped, the carriage 13 will start moving upward in the direction of the arrow P and the bicycle will take up a more vertical position. Then, the rods 20 and 21 will move the lower end of the beam 12 to the right in the direction of the arrow R so that the bicycle will come to hang almost free from the beam 12. After the rim 25 of the front wheel has reached a certain height, conveyor chain 5 can be activated so that a suspension hook 6, fixedly connected to, it will come to fall underneath the rim 25. The carriage 13 will then be moved slightly downward so that the rim will come to bear in the hook. Then, one releases air from the air cushion of counterpart 18 of the clamp 15 so that the wheel will be released. After that, the carriage 13 can be moved further downward, so that the conveyor chain 5 can continue moving without the bicycle contacting the carriage 13. At the same time, space will become avaible for receiving a subsequent bicycle. When removing a bicycle from the device, one will act in the reverse order.

Fig. 4 shows the position of the bicycle 4 when it has been suspended in the hook 6 and has been released by the clamp 15 of the carriage 13. The carriage 13 will then move downward as indicated by arrow S.

For guiding the wheels 16 and 26 of a bicycle 4 when bringing it into the storage and removing it from the storage, a guiding trough 27 will have been mounted on the ground. This is particularly important when the bicycle moves downward and is pushed out.

In order to prevent an unauthorized person from removing a bicycle from a suspension hook 6 connected to the conveyor chain 5, the suspension hook can be provided with means not further indicated, which can be activated and deactivated by the carriage only.

Figures 5 and 6 illustrate the possibility that a suspension hook 6 is connected to the conveyor chain 5 by means of a pivot shaft 28. A tension spring 29 extends between the suspension hook 6 and a fixed location of the conveyor chain 5. When pivoting the suspension hook 6 from one end position to the other end position, the tension spring 29 passes the pivot shaft 28, so that the suspension hook always takes up the stable end position. The end positions of the suspension hook 6 can be achieved in a known manner, such as by stop members at the conveyor chain.

In Figure 5, the front wheel 16 of a bicycle 4 has been brought at a certain height by means of the carriage 13 with the clamp 15. When moving the carriage slighty further upwards, the pushing element 30 connected to it will contact a cam 31 connected to the suspension hook 6, so that the suspension hook is pivoted to the other end position under action of said tension spring 29. Then, the carriage 13 can be moved downward so that the wheel 16 will come to bear in the suspension hook 6 and the clamp 15 can release the wheel, as illustrated in Figure 6.

When removing a bicycle, the carriage 13 is brought upward across a certain distance so that the wheel 16 can be clamped. Then, the carriage is moved further upward and the pushing element 30 will engage a cam 32 of the suspension hook 6, so that the suspension hook 6 will move back to the end position illustrated in Figure 5. A portion of the pushing element 30 is pivotable around the pivot axis 33, so that it can pass the cam 30 and subsequently move back to its starting position by a spring not illustrated.

For controlling the movements of the conveyor chain 5, the beam 12 and the carriage 13, switches, sensors and the like - not illustrated - will be applied, as the skilled person will understand.

When bringing a bicycle into the storage and removing it therefrom, one can employ operating means such as have been illustrated in EP-A-0 659 958 as already stated above. Magnetic cards, pin codes or like means known per se can be applied with it. Through this, it can be achieved that: only the person who has brought the bicycle into the storage will be able to remove it from the storage again.

It will be obvious, that only some possible embodiments of a device according to the invention have been illustrated in the drawing and described above and that many changes can be made without departing from the inventive idea, as it has been indicated in the accompanying claims.

## Claims

1. Device for storing bicycles (4), said device comprising an endless conveyor chain (5) which can be driven and is supported at a distance above the ground by guiding means (7), by which conveyor, by means of suspension hooks (6), the front wheels of a number of bicycles can be suspended, a manipulator (11) being situated where a bicycle can be put into and removed from the device, said manipulator (11) comprising a beam (12) along which a carriage (13) is movable, said carriage being provided with means (15) capable of engaging the front wheel (16) of the bicycle for moving it upwards and transferring it to a suspension hook (16) and vice versa, **characterized in that** the carriage (13) is provided with a clamp (15) for clamping the front wheel (16) of a bicycle (4) and that the beam (12) of the manipulator (11), along which the carriage (13) moves, is pivotably mounted to a pivot shaft (19) near its upper end, in such a way that the beam (12) can pivot within a plane being square to the longitudinal direction of the conveyor chain (5), means (20, 21) being present for moving the beam (12) from an inwardly slanted position into an outwardly slanted position, and vice versa, said conveyor chain (5) being provided with hooks (6), from which the front wheel (16) of a bicycle (4) can be suspended.

2. Device according to claim 1, **characterized in that** the clamp (15) is designed in such a way, that a first part (17) of it is fixedly connected to the carriage (13), whereas the counterpart (18) is movable, with at least one of the parts extending across such a length, that it contacts the rim (25) of the wheel (16) or the tyre located on it, at two spaced-apart positions.

3. Device according to claim 1 or 2, **characterized in that** the counterpart (18) of the clamp (15) can be constituted by at least one inflatable air cushion, at one side being directed to the first part (17) of the clamp (15) which is fixedly connected to the carriage and at the other side contacting a support portion fixedly connected to the carriage (13).

4. Device according to one of the preceding claims, **characterized in that** at some distance from the beam (12) of the manipulator (11) there is a wall (23) having an opening, through which the bicycle (4) can be ridden until its front wheel (16) is received between the parts (17, 18) of the clamp (15) which are connected to the carriage and the steering rod of the bicycle is almost within the opening (23) in the wall.

5. Device according to one of the preceding claims, **characterized in that** the carriage (13) is provided with at least one switch (22), which, in the lowermost or uppermost position of the carriage (13), can be operated directly or indirectly by the front wheel (16) of a bicycle (4) in order to activate the clamp (15) connected to the carriage (13).

6. Device according to one of the preceding claims, **characterized in that** a guiding trough (27) for the wheels (16, 26) of a bicycle (4) has been provided on the ground near the manipulator (11).

7. Device according to one of the preceding claims, **characterized in that** pivoting of the beam (12) of the manipulator (11) takes place by means of an electrically or pneumatically driven rod system (20, 21).

8. Device according to one of the preceding claims, **characterized in that** the suspension hook (6) is pivotably connected to the conveyor chain (5), in such a way that its pivot axis (28) is square to the longitudinal direction of the conveyor chain and extends parallel to the plane in which the conveyor chain is situated, said suspension hook (6) being movable between two end positions and suspension hook and carriage (13) being provided with members (30-33) capable of cooperating with one another in order to bring the suspension hook from one end position to the other end position.

9. Device according to claim 8, **characterized in that** the suspension hook (6) is held in both end positions **in that** a tension spring (29) is mounted between the suspension hook and a fixed point of the conveyor chain (5), said tension spring passing the pivot shaft (28) when moving the suspension hook from one end position to the other, said suspension hook being provided with cams (31, 32) capable of cooperating with a pushing element (30) connected to the carriage.

10. Device according to claim 8, **characterized in that** the suspension hook is pivoted by electrically or pneumatically operated means connected to the carriage (13), which will engage parts of the suspension hook (6) when moving the carriage upwards.
